# EUROPEAN PATENT APPLICATION

(11) **EP 2 227 941 A2**
(43) Date of publication of application: **15.09.2010**
(21) Application number: 10002355.5
(22) Date of filing: 08.03.2010
(51) Int. Cl.: A01G 9/14

(54) **Roof construction**

(30) Priority: 11.03.2009 NL 1036694
(71) Applicant: Meteor Systems B.V., 4879 NG Etten-Leur (NL)
(72) Inventor: Bastiaansen, Christiaan Adrianus Cornelis A., 4879 NG Etten-Leur (NL)
(74) Representative: Griebling, Onno

(57) **Abstract**

A greenhouse (1) comprises a system of uprights (110) arranged in rows. Each upright comprises a first upright part (111) fixed with respect to a bottom and a second upright part vertically displaceable with respect to the first upright part (111). Mutually parallel ridge beams (150) are attached to the upper ends of the two upright parts. Roof gutters (160) are suspended between the rows of uprights, mutually parallel and parallel to the ridge beams, wherein a roof gutter, via oblique connection elements (141), is always connected to the two upright parts of the two uprights (110) on opposite sides.

The greenhouse further comprises a roof formed by a plastic foil (170), always lying on a ridge beam and the connection elements coupled thereto, and of which the side edges are connected to the side edges of the roof gutter. The connection elements have an adaptable length in order to be able to vary the height of the roof gutter (160) and thus to be able to tighten the roof foil (170).

## Description

The invention relates to a roof construction, particularly for a greenhouse for growing products such as vegetables and fruit.

A greenhouse has Lhe function of protecting the vegetation growing therein against, in particular, cold, wind and rain, while sunlight is passed to this vegetation. A greenhouse may have the classic shape of a house, and then generally comprises walls and a roof, wherein the roof typically has a triangular contour with oblique roof faces. Usually, the walls and roof faces are made of glass plates accommodated in a metal frame. However, this requires a relatively expensive and permanent design. It is also known to form a greenhouse from plastic foil, that is tensioned around support arcs: a so-called tunnel greenhouse. Such greenhouse has a temporary character. Tunnel greenhouses, however, are relatively small, and tensioning the foil on the arcs is tedious. Further, known tunnel greenhouses are only suitable for growing vegetation standing on or in the ground. For growing vegetation having a certain height, it is known to place a growing gutter construction in a traditional greenhouse (house-shaped greenhouse or tunnel greenhouse) on columns, in which case a column must be placed below each gutter at a regular mutual distance (around 2 meter).

The present invention aims to provide a construction for a greenhouse combining the advantages of a tunnel greenhouse and a house-shaped greenhouse. More particularly, the present invention aims to provide a construction for a greenhouse that can be assembled and disassembled relatively quick and easily, and of which the components require relatively little space in the assembled condition.

These and other aspects, features and advantages of the present invention will be further clarified by the following description with reference to the drawings, in which same reference numerals indicate same or similar parts, in which indications "under/above", "higher/lower", "left/right" etcetera only relate to the orientation shown in the drawings, and in which:
figure 1 schematically shows a perspective view of a part of an embodiment of a support construction for growing gutters of a greenhouse proposed by the present invention;
figure 2 schematically shows a perspective view of a part of an embodiment of a roof construction proposed by the present invention for a greenhouse;
figure 3 schematically shows a perspective view of a part of an embodiment where the support construction and roof construction are integrated;
figure 4 schematically shows a perspective view, comparable to figure 1, of an end part of the support construction;
figures 5A-E show mounting details;

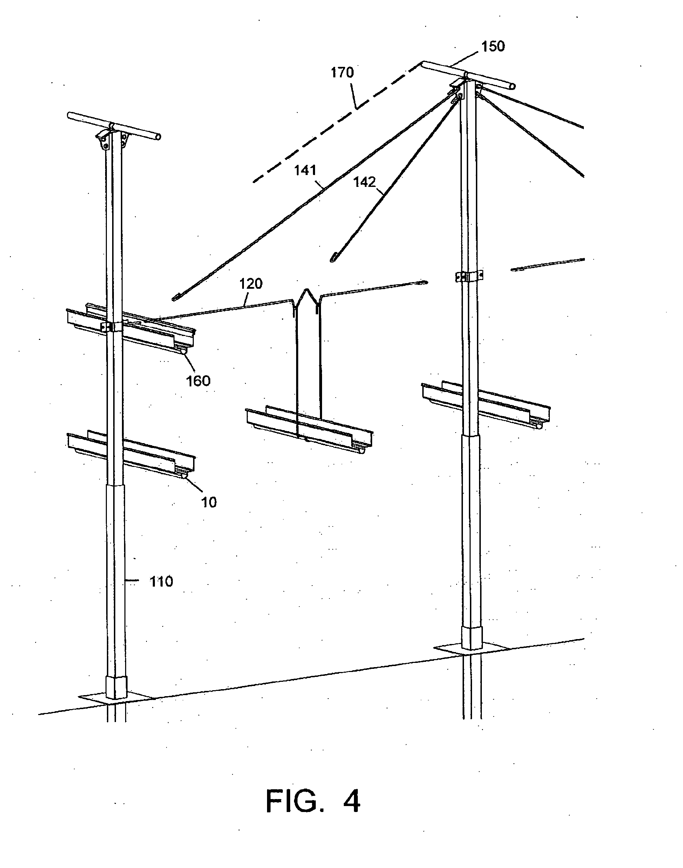

figure 4 illustrates another embodiment of a greenhouse proposed by the present invention.

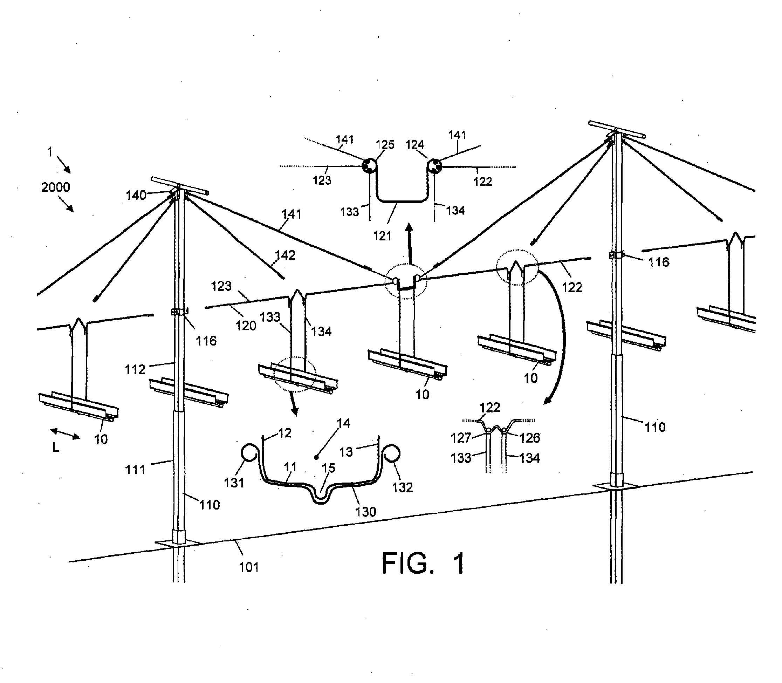

Figure 1 schematically shows a perspective view of a part of an embodiment of a greenhouse 1 proposed by the present invention, for sake of clarity in a disassembled condition. The greenhouse 1 comprises a system of multiple, mutually parallel horizontal growing gutters 10. Each growing gutter is intended to place therein a substrate in which the vegetation to be grown is growing. Each growing gutter is typically formed as a folded plate, and has a longitudinal direction that is indicated by the arrow L in figure 1. Commercial growing gutters typically have a length of many tens of meters, and may be longer than 100 meter. Figure 1 only shows a small part of the length of some growing gutters arranged adjacent each other. The longitudinal direction L of the gutters will also be indicated as longitudinal direction of the greenhouse. The horizontal direction perpendicular to this longitudinal direction will be indicated as width direction.

The greenhouse 1 has a roof construction that in general is indicated by the reference numeral 100, and a suspension construction for the growing gutters that in general is indicated by the reference numeral 2000. As common element for these two constructions 100, 2000, the greenhouse has a framework that is formed by uprights 110. Each upright 110 is extendable. Although various designs are conceivable for this, in the embodiment shown each upright 110 is telescopic, that is to say that each upright comprises at least two upright tubes 111, 112 displaceable in each other. The lower tube 111 is anchored with respect to the bottom 101; in the embodiment shown, the lower tube 111 extends into the bottom 101 over a part of its length, and this tube 111 will also be indicated as "anchor tube". The second tube 112 will also be indicated as "telescope tube". In principle, it is possible that another third tube is telescopically displaceable in the second tube 112, but that is not necessary in general and is not shown in the figure. The telescope tube 112 can be fixed with respect to the anchor tube 111 in a desired position by suitable clamping means, as will be clear for a person skilled in the art and not shown for sake of simplicity.

The figure shows some uprights standing next to each other in the width direction. The suspension construction 2000 shown in figure 1 for the gutters 10 repeats itself along the length of the gutters 10.

With reference to figure 1, the suspension construction 2000 will now be discussed first.

An attachment flange 116 is attached to each telescope tube 112, at a certain distance under the upper end of the telescope tube 112. The manner of fixation is not essential: this may for instance have been done by welding or screwing or the like. Preferably, the flange 116 is part of a bracket clamped to the telescope tube 112, so that it is possible to change the vertical position of the flange 116 with respect to the telescope tube 112. A horizontal carrier 120 is always connected to the attachment flanges 116 of two uprights 110 standing next to each other in the width direction. The carrier 120 comprises a central substantially U-shaped carrier bracket 121 and two elongate carrier elements 122, 123, attached to the carrier bracket 121 and a respective attachment flange 116. Although various embodiments and attachment methods are conceivable here, a preferred embodiment of the present invention has the following design. Each attachment flange 116 has an attachment eye. The carrier bracket 121 is provided with two attachment eyes 124, 125. Each carrier element 122, 123 is implemented as a metal bar of which the ends are bent hook-shaped over about 180°. The one hook-shaped end of a carrier element 122, 123 engages into an attachment eye 124, 125 of Lhe carrier bracket 121 while the other hook-shaped end of the carrier element 122, 123 engages into the attachment eye of the corresponding attachment flange 116.

Instead of a metal bar, a carrier element could be implemented as cable.

Instead of separate carrier elements 122, 123 and a separate carrier bracket 121, the horizontal carrier 120 may be implemented as an integrated one-part whole.

Multiple growing gutters 10 are suspended from the horizontal carrier 120 between two uprights 110. Each gutter 10 is supported by a support bracket 130. The gutters 10 may have different contours, and the support brackets 130 have a contour adapted to the corresponding gutters 10. In the embodiment shown, each growing gutter 10 has a substantially U-shaped cross section with a bottom 11 and sidewalls 12 and 13 which together define a space 14 for accommodating growing substrate. A central recess 15 is arranged in the bottom 11, serving as discharge channel for discharging superfluous water. The support bracket 130, which may be shaped as a bent metal strip, extends transversely under the gutter 10 and is provided with attachment eyes 131, 132 at its ends. The attachment eyes 131, 132 may be separate parts attached to the support bracket 130, but preferably are formed integrally to the support bracket 130 by bending the ends thereof, as shown.

The support bracket 130 is suspended from the horizontal carrier 120 by means of vertical suspension elements 133, 134. The suspension elements 133, 134 may be implemented as cable or chain. In the preferred embodiment shown, each suspension element 133, 134 is implemented as a metal bar of which the ends are bent in the shape of a hook over about 180°, wherein the lower hook-shaped end of a suspension element 133, 134 engages into an attachment eye 131, 132 of the support bracket 130; alternatively, the metal bar could be shaped integrally with the support bracket 130. For a central gutter 10, positioned under the carrier bracket 121, the upper hook-shaped end of the suspension element 133, 134 engages into the attachment eye 125, 124 of the carrier bracket 121. For a gutter 10 placed off centre, the upper hook-shaped end of the suspension element 133, 134 engages directly to a carrier element 122 or 123. In that case, it is preferred that the bar-shaped suspension element 122, 123 is bent in a W-shape, wherein the upper hook-shaped ends of the suspension elements 133, 134 are located in respective pits 127, 126 of the W-shape, in order to achieve a positional anchoring in the width direction. If a carrier element is implemented as a cable, this cable may be provided with a W-shaped bent bracket.

It is also possible that a support bracket 130 at one end thereof is attached to the telescope tube 112, while its other end is suspended from a carrier element 123 by a suspension element 135, as shown in figure 1 at A. In that case, the positional anchoring in the width direction is already offered by the attachment to the telescope tube 112, so that it is not necessary to bend the carrier element 123 into a W-shape or V-shape.

The horizontal carrier 120 is carried in multiple places by guy elements 141, 142 connected to the uprights 110. An attachment flange 140, which will be indicated as upper attachment flange, is attached to each telescope tube 112, at the upper end thereof or at least at a position higher than the attachment flanges 116. Here again, it applies that the manner of attachment is not essential, but for instance each attachment flange 140 is attached through welding. Each upper attachment flange 140 comprises preferably one or more attachment eyes. A first guy element 141 extends from this upper attachment flange 140 to the central carrier bracket 121, more particularly to an attachment eye 124, 125 thereof. A second guy element 142 extends from the upper attachment flange 140 to an attachment point at a carrier element 122, 123, more particularly to the central crest of the W-shaped bent part thereof. Each guy element 141, 142 may be implemented as a cable or chain but is preferably and as shown implemented as metal bar of which the ends are bent over about 180°.

It is noted that the central carrier element 121 may also be implemented as a bracket bent in a W-shape.

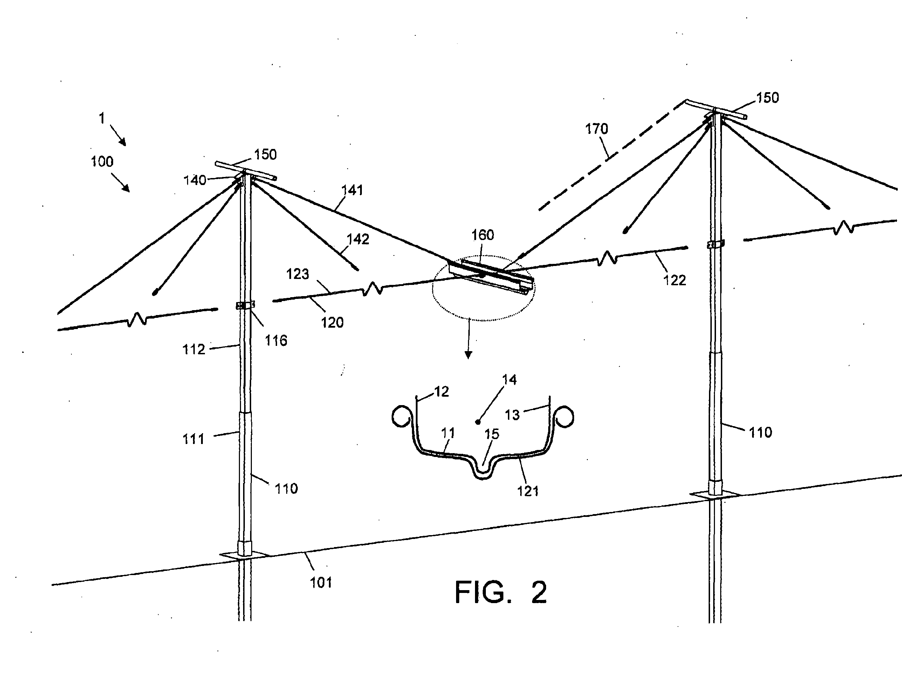

With reference to figure 2, the roof construction 100 will be discussed now.

At its upper end, each upright 110 is provided with a ridge 150 extending in the longitudinal direction of the greenhouse, connecting the adjacent uprights to each other. Only a part of this ridge 150 is shown in figure 2. For obtaining more stability in the longitudinal direction of the greenhouse, each upright 110 may further be provided with one or more oblique shoring lines to the bottom or to the foot of an adjacent upright, but this is not shown in this figure.

In this example, the roof construction 100 comprises a horizontal carrier 120, that comprises a central carrier bracket 121 and to elongate carrier element 122, 123, which carrier 120 is attached to flanges 112 and is connected to attachment flanges 140 through guy elements 141, 142. For these components, the same applies as what has been described in the above in the context of the suspension construction 2000, so that this description is not repeated.

The central carrier brackets 121 carry a roof gutter 160 extending in the longitudinal direction of the greenhouse. Although the shape of this roof gutter 160 is not critical, it is advantageous if this roof gutter has the same shape as the growing gutters 10, in other words that a growing gutter is used as roof gutter. This has the advantage that is not necessary to manufacture different types of gutters. In a possible embodiment, the central carrier bracket 121 for carrying the roof gutter 160 is implemented in the same way as the support bracket 130, as illustrated in the enlargement of figure 2, so that a discussion thereof is not repeated.

Over the ridge 150, a plastic foil 170 is arranged, which is only indicated schematically in figure 2, and which is directed obliquely downwards to the roof gutter 160 and is attached thereto, as will be clarified later. This roof foil 170 is thus supported by the first connection elements 141. According to an important aspect of the present invention, the first guy elements 141 and possibly also the second guy elements 142 are adaptable in length. This may for instance be implemented by having a guy element consist of two parts wherein the one part can be screwed into the other part, or wherein both parts are provided with mutually oppositely orientated screw threads as well as a tightening swivel engaging both screw threads, as known per se. By increasing the length of the first connection element 141, the roof gutter 160 lowers with respect to the ridge 150, causing the foil 170 forming the roof to be tightened.

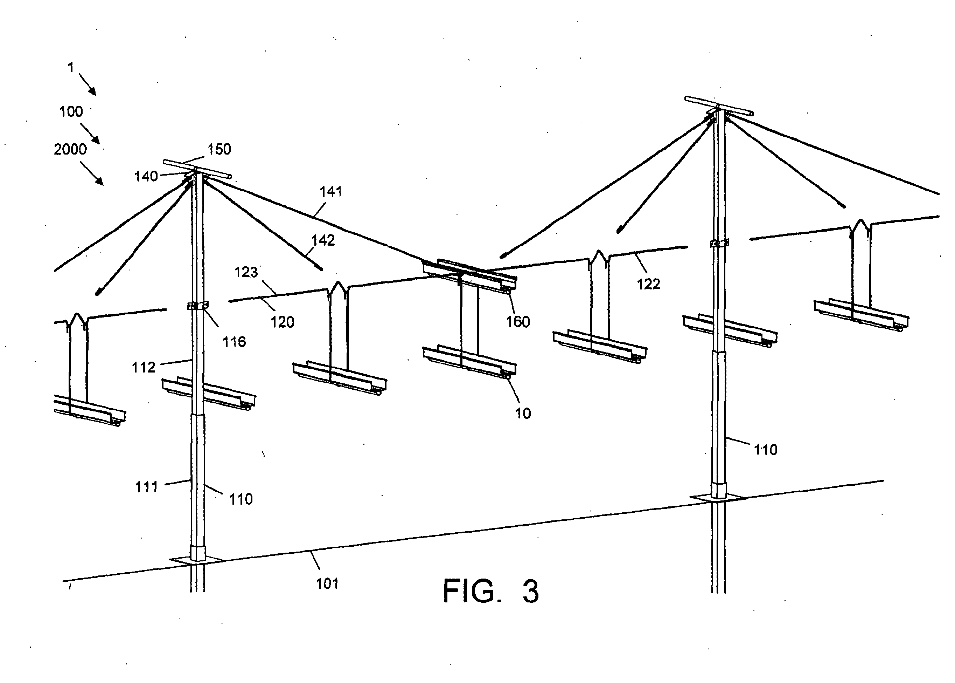

In the above, the suspension construction 2000 and the roof construction 100 have been discussed separately. Basically, they could be applied separately in a greenhouse, and it is even possible that the roof construction 100 is applied without the growing gutters 10 and their carrier construction 2000, for instance for growing in the ground or in containers standing on the ground. In an embodiment of the greenhouse 1, however, the roof construction 100 and the carrier construction 2000 are integrated with each other, as illustrated in figure 3. In that case, the horizontal carrier 120 and the guy elements 141, 142 are both a functional part of the suspension construction 2000 for carrying the growing gutters 10 and a functional part of the roof construction 100 for carrying the roof foil and the roof gutters 160. It is also possible to say that the growing gutters 10 are suspended from the roof construction 100.

It may be clear that the present invention thus provides a construction for a temporary growing greenhouse that can be assembled or disassembled easily, and that consists of relatively simple and cheap parts that have a relatively low weight and that require relatively little space in the disassembled condition.

By shifting the telescope tubes 112 with respect to the corresponding anchor tubes 111, the entire roof construction including the growing gutters 10 suspended therefrom can be positioned higher or lower. It is possible that the vertical position of the telescope tubes 112 with respect to the corresponding anchor tubes 111 is set once on building the construction, but it is also possible that each upright 110 is provided with a dedicated winch, or that the installation is provided with a mobile winch that can be connected to each upright 110 for increasing or reducing the height of the roof after building.

Figure 4 is a schematic view showing that, at the sides of the greenhouse 1, a roof gutter 160 and the growing gutter 10 positioned thereunder are attached to an upright 110.

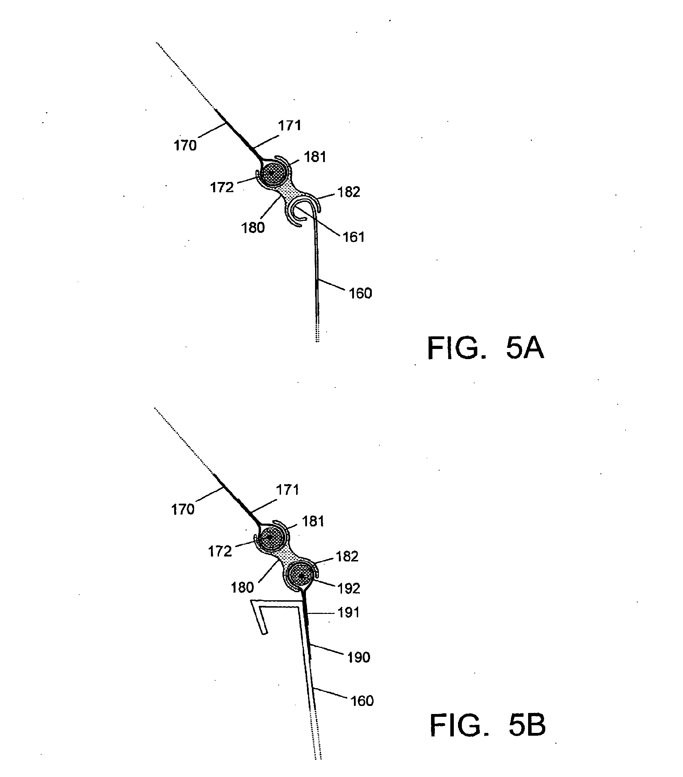

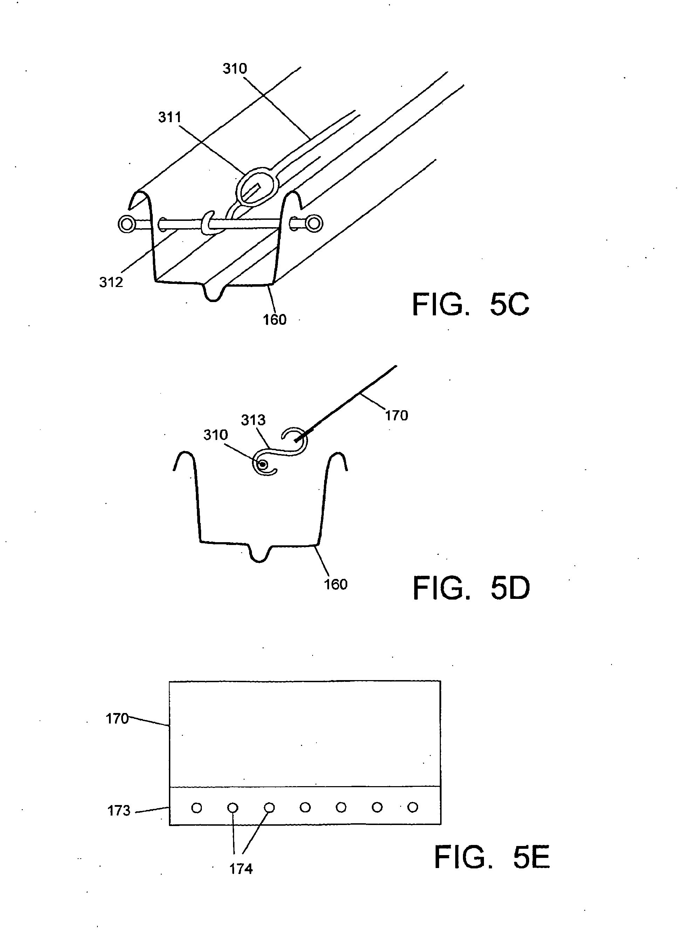

Several designs are possible for connecting the roof foil to the roof gutter 160. Figures 5A and 5B show several examples of possible variations of embodiment therefore. In both cases, the roof foil 170 at its end edge is provided with a turnup 171 with a string 172 therein. A rubber coupling piece 180 has a first channel 181 for accommodating this string 172. The string 172 can shift in this first channel 181 in the longitudinal direction, but cannot be pulled out of the channel 181 in the transverse direction. The coupling piece has a second channel 182 opposite the first channel 181.

In the first embodiment variation of figure 5A, the roof gutter 160 has a folded upper edge 161 that forms a thickening fitting into the second channel 182.

In the second embodiment variation of figure 5B, a coupling tape 190 is provided, that is also provided with a string 192 in a turnup 191. The string 192 of the coupling tape 190 is arranged in the second channel 182, while the coupling tape 190 may be attached to the wall of the roof gutter 160, for instance by screwing.

An alternative manner of attachment will be described with reference to figures 5C-5E. Figure 5C is a perspective view that schematically shows the end of the roof gutter 160, wherein a transverse end wall of the roof gutter is omitted for sake of clarity. A steel cable 310 (or, alternatively, a bar) is arranged under pulling tension in the longitudinal centre of the roof gutter 160. In the embodiment shown, the steel cable 310 is attached to a transverse bar 312 attached transversely to the gutter 160, by means of a tightening swivel 311. This transverse bar 312 may for instance be attached through two holes arranged opposite each other in the side walls of the gutter. Such transverse bars 312 may be arranged at regular intervals along the length of the roof gutter 160.

Along the side edge of the roof foil 170, at regular mutual intervals, hooks 313 are attached. The hooks 313 may be S-hooks, as can be clearly seen in figure 5D. With reference to figure 5A, the roof foil 170 at its side edge may be provided with a turnup 171 and a string 172 therein. Holes may be arranged at regular mutual intervals in this turnup 171, in which case one end of an S-hook extends through such hole and engages behind the string 172. It is also possible that the roof foil 170 at its side edge is provided with a strengthening tape 173, for instance from PVC, as schematically illustrated in figure 3E, wherein holes 172 are arranged in this strengthening tape 173 at regular mutual intervals.

The other ends of the hooks 313 engage the steel cable 310, as clearly follows from figure 5D. An advantage of this design is that the foil 170 can be fixed and loosened easier. Further, the advantage is achieved that rain water (outside) and condensate water (inside) dripping from the foil roof 170 is caught by the roof gutter 160 with certainty. Further, the advantage is achieved that a ventilation is possible along the side edge of the roof foil.

Thus, the present invention provides a roof house 1 with a system of uprights 110 arranged in rows. Each upright comprises a first upright part 111 fixed with respect to a bottom and a second upright part vertically displaceable with respect to the first upright part 111. Mutually parallel ridge beams 150 are attached to the upper ends of the two upright parts. Roof gutters 160 are suspended between the rows of upright, mutually parallel and parallel to the ridge beams, while a roof gutter via oblique connection elements 141 is always connected to the second upright parts of the two uprights 110 on opposite sides. The greenhouse further comprises a roof formed by plastic foil 170, always lying on a ridge beam and the connection elements coupled thereto, and of which the side edges are connected to the side edges of the roof gutter. The connection elements have an adaptable length in order to be able to vary the height of the roof gutter 160 and thus to be able to tighten the roof foil 170.

It will be clear to a person skilled in the art that the invention is not limited to the exemplary embodiments discussed in the above, but that several variations and modifications are possible within the protective scope of the invention as defined in the attached claims.

In the embodiment described, the growing gutters are U-shaped. It is also possible to use growing gutters with another contour, for instance an inverted U-shape or Ω-shape. The roof construction of the greenhouse is however also usable if no use is made of growing gutters, for instance for growing products in the ground. Furthermore, the roof construction can be used in all situations where it is desirable to be able to build a temporary roof construction quickly and simply, for instance for covering a market place.

In the embodiment shown, one growing gutter is suspended from the uprights and three growing gutters are suspended between the uprights, with one central growing gutter between the roof gutter and two decentral growing gutters on opposite sides thereof. It is however also possible that multiple gutters are suspended from the horizontal carrier 120 on opposite sides of the central growing gutter. Conversely, it is possible that there are no gutters suspended from the horizontal carrier 120 on opposite sides of the central growing gutter, in which case the horizontal carrier may even be omitted. It is further possible that the central growing gutter under the roof gutter is missing, if the distance between the uprights is too small for placing four gutters next to each other.

In the embodiment shown in figure 1, the telescope tube 112 shifts in the anchor tube 111. It is however also possible that the telescope Lube 112 has a larger diameter than the anchor tube 111 and is thus positioned around the anchor tube 111. This also offers the advantage that the entry of moist into the anchor tube 111 is counteracted.

Applying an upright 110 with adaptable length among other things has an advantage that the uprights are more easy to handle when assembling or disassembling, that it is easier to correct deviations, and that it is easier to suspend the roof gutters at a slope.

In the embodiment discussed with reference to figure 1, the upper attachment flange 140 is fixed with respect to the telescope tube 112. In a preferred variation, the upper attachment flange 140 is vertically displaceable with respect to the telescope tube 112. With more preference, the attachment flange 140 and the ridge beam 150 are attached to an upright part that is adaptable in height with respect to the telescope tube 112, so that the height of the ridge beam can be amended.

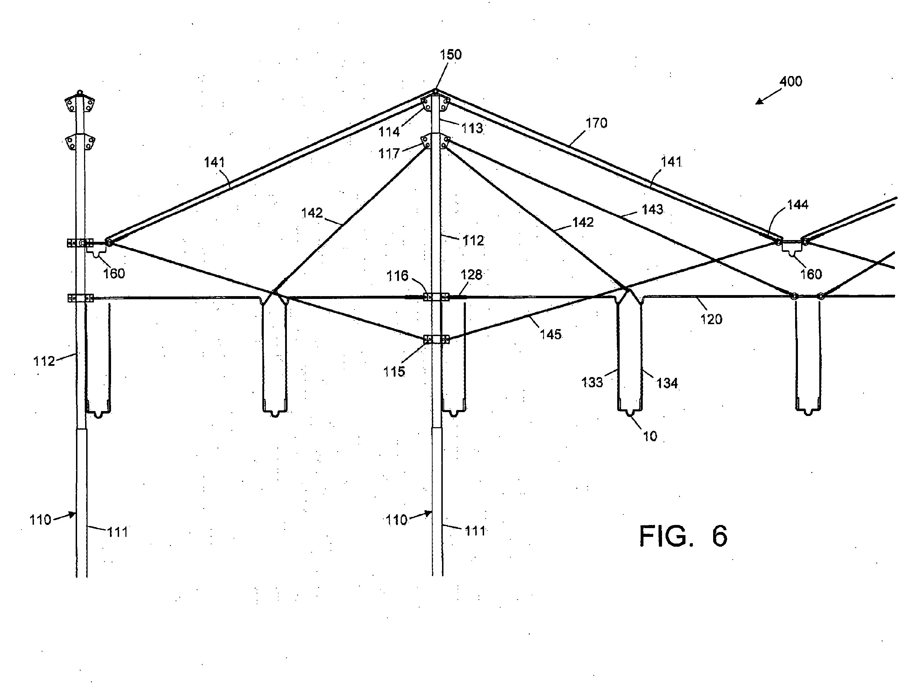

Figure 6 illustrates another embodiment of a greenhouse according to the present invention, of which the roof construction 400 is decoupled from the carrier construction of the growing gutters (wherein it will be clear that the carrier construction of the growing gutters can be omitted if desired). The roof construction 400 again comprises the uprights 100, which again are preferably implemented in two parts with an anchor tube 111 and a telescope tube 112. A third upright segment 113 is arranged at the upper end of the telescope tube 112, which will be indicated as ridge upright segment, and that is attached telescopically in the upper end of the telescope tube 112 so that its vertical position is adaptable. A first attachment flange 114 is attached to the ridge upright segment 113. First guy elements 141 are attached to the first attachment flange 114, carrying the roof gutters 160. The first guy elements 141 may again be implemented as bars or cables, and are extendable by means of tightening swivels 144. The roof foil 170 is again attached to the roof gutters 160. By extending the first guy elements 141, the roof gutters 160 lower in order to tighten the roof foil 170.

In the case of storm, the roof gutters might be able to be lifted by the wind. In order to counteract this, the roof construction 400 further comprises anchoring cables 145, tightened between the roof gutter 160 and a second flange 115 attached to the telescope tube 112 at a lower level. This second flange 115 also is preferably clamped to the telescope tube 112 in order to be displaceable in vertical direction. Also the anchoring cables 145 may be provided with tightening swivels, but this is not shown for sake of simplicity.

A horizontal carrier 120 for growing gutters 10 is suspended from third flanges 116, attached to the upright 110. Also this third flange 116 is preferably clamped to the telescope tube 112 in order to be displaceable in vertical direction. The horizontal carrier 120 can be tightened by tightening swivels 128. The horizontal carrier 120 is supported by second and third guy elements 142 and 143, which again may be implemented as bar or cable, and which at their upper ends are attached to a fourth flange 117 which in turn is attached to the telescope tube 112 near the upper end thereof. Instead of a common flange 117 for the second and third guy elements 142 and 143, there may also be separate flarges.

Features which have only been described for a certain embodiment are also applicable in other embodiments described. Features of different embodiments may be combined for achieving another embodiment. Features which have not explicitly been described as being essential may also be omitted.

The reference numerals used in the claims only serve as clarification when understanding the claims with a view to the exemplary embodiments described, and should not be interpreted in any way limiting.

## Claims

1. Roof construction (100; 400) for a greenhouse (1), comprising:
a system of uprights (110) arranged in rows, wherein each upright (110) preferably comprises a first upright part (111) fixed with respect to a bottom and a second upright part (112) vertically displaceable with respect to the first upright part (111);
wherein mutually parallel ridge beams (150) are attached to the upper ends of the uprights (110);
wherein roof gutters (160) are suspended between the rows of uprights (110) by means of first guy elements (141), with the roof gutters mutually parallel and parallel to the ridge beams (150);
wherein the greenhouse further comprises a foil roof (170), always lying on a ridge beam (150) and of which the side edges are connected to the roof gutter (160);
and wherein the guy elements (141) have an adaptable length in order to be able to vary the height of the roof gutter (160) and to thus be able to tighten the roof foil (170).

2. Roof construction according to claim 1, wherein a guy element (141) comprises a cable or a metal bar of which the ends are bent over about 180°.

3. Roof construction according to claim 1 or 2, wherein the roof gutter (160) lies on carrier brackets (121), wherein the guy elements (141) engage the carrier brackets (121).

4. Roof construction according to any of the previous claims, wherein the upper ends of the guy elements (141) engage a first attachment flange (114) that is attached at the upper end of the upright (110).

5. Roof construction according to claim 4, wherein the first attachment flange (114) and the ridge beam (140) are attached to a vertically adaptable ridge upright segment (113).

6. Roof construction according to any of the previous claims, further comprising at least one anchor cable (145), tightened between the roof gutter (160) and a second flange (115) attached to the upright (110) at a level lower than the roof gutter (160).

7. Roof construction according to any of the previous claims, wherein a steel cable (310) or the like is tightened centrally in the roof gutter (160), and wherein the foil roof (170) is attached to this steel cable, for instance by means of S-hooks (313).

8. Greenhouse (1), provided with a roof construction according to any of the previous claims, further provided with a carrier construction for carrying growing gutters (10).

9. Greenhouse according to claim 8, wherein the growing gutter carrier construction comprises a horizontal carrier (120) extending substantially perpendicular with respect to the ridge beams (150) and of which the ends are attached to two uprights (110);
wherein the horizontal carrier (120) is supported by at least one guy element (141; 142; 143);
and wherein at least one growing gutter (10) is suspended from the horizontal carrier (120).

10. Greenhouse according to claim 9, wherein the roof gutter (160) is coupled to the horizontal carrier (120).

11. Greenhouse according to claim 10, wherein under the roof gutter (160) a growing gutter (10) is suspended from the roof gutter (160) or from carrier brackets (121) carrying the roof gutter (160), respectively.

12. Greenhouse according to any of the claims 9-11, wherein the horizontal carrier (120) at the location of the suspension of the growing gutter (10) is bent according to a W-contour or is provided with a bracket bent in a W-shape.

13. Greenhouse according to claim 12, wherein a guy element (142) is coupled to the central bend of the W-shape.

14. Greenhouse according to any of the previous claims 8-13, wherein a growing gutter (10) is attached to a row of uprights (110).
